# EUROPEAN PATENT APPLICATION

(11) **EP 1 753 211 A2**
(43) Date of publication of application: **14.02.2007**
(21) Application number: 05256495.2
(22) Date of filing: 20.10.2005
(51) Int. Cl.: H04M 1/2745, H04M 1/57, H04M 1/725

(54) **Ringing image for incomming calls**

(30) Priority: 12.08.2005 GB 0516615
(71) Applicant: Nokia Corporation, 02150 Espoo (FI)
(72) Inventor: Nielsen, Peter Dam, 2800 Kgs Lyngby (DK); King, Isabel, Surrey GU7 2JZ (GB)
(74) Representative: Slingsby, Philip Roy

(57) **Abstract**

An electronic device (100) for displaying an image comprising a display (104); a memory (202); and user input apparatus (102); characterised in that the device (100) has a first mode in which the device displays images in respect of first files stored in the memory (202) and in which in response to operation of the user input apparatus (102) to indicate one of the first files the device display switches to a second mode in which the device displays an image in respect of a second file in association with the selected first file.

## Description

The present invention relates to an automatic change of an image display, and more particularly to an automatic change to an image display when an item is selected on an electronic device such as a mobile phone.

Many mobile phones include functions which allow the display of images. Some devices have a library of images which are universally supplied in the initial setup of the phones such as image backgrounds or emotion icons, whilst others allow the downloading or receipt of images or pictures which can then be stored. Some mobile phones, commonly referred to as camera phones, also include a camera function allowing a user to take photographs or videos and store them. Typically, the camera unit itself may be built into the mobile phone or may be attached to it.

Images stored on the electronic device are most often held in the device's internal memory. Usually, the memory is divided into a series of folders or files. For example, when an image is captured or received on a camera phone, the image is displayed on the screen of the camera phone to allow the user to review the image and decide what they wish to do with it, usually, delete or save it. The user can utilise the menus and options displayed on the screen in conjunction with the navigation controls, which comprise the user interface of the camera phone, to manually specify a specific folder in which to store the captured image.

A popular feature of mobile phones is their facility for a user to assign a static image (e.g. a picture, icon, photo), called a thumbnail image, to a phonebook contact entry. This "phonebook image" feature has the effect that when a user is viewing the details of a contact entry in the phonebook he will also see that image. For example, the phonebook entry may be viewed in the form of a list of data items associated with that entry, such as name, phone number and email address, with the thumbnail image shown at the top of the list or in the background.

Another popular feature is the facility to assign a ringing background to a phonebook entry contact. The ringing background may again be a static image or a dynamic image (e.g. video clip, animated sequence) image, which may be the same as or different from that used for the feature described in the preceding paragraph. This "ringing image" feature has the effect that when an incoming call arrives from that contact the ringing background assigned to that contact is shown on the display, normally with other data such as the incoming phone number or the contact's name overlain on it.

As phones include more and more features it becomes increasingly important to enable a user to configure and use them in a convenient and intuitive way.

A problem with current devices is that checking the configuration of phonebook images and ringing images is a cumbersome procedure. Since the phonebook images and ringing images are typically stored in individual files, one method is to allow a user to browse to those files in the phone's memory so as to check the configuration. This is not an intuitive procedure and users who are not familiar with filing system concepts may find it difficult to use. A second method is to integrate the image browsing into the menu structure of the phone. Typically, in a first phonebook screen the phone will display a list of rows, each row identifying a contact by some key information such as name. The corresponding phonebook image may be displayed next to the name in each row. To view the full details the user selects the appropriate row, for example by scrolling a cursor so as to highlight the row, and then activates a selection means such as a button on the keypad to cause the full details of the selected contact to be displayed. As described above, the full details of the contact together with the phonebook image for that contact will then be displayed on the screen. The user can then select an option from a menu to display the corresponding ringing image. This gives the user a limited impression of the in-call behaviour for the contacts in the phonebook, and makes it difficult for a user to check the ringing behaviour.

There is therefore a need for an improved image display system that can be applied to operations such as the phonebook thumbnail image and ringing background functions.

The present invention seeks to provide a system to at least partially address these problems. In a preferred embodiment of the present invention the user can see the assigned ringing background immediately from the contacts list simply by indicating the contact thumbnail image. The existing layout for the thumbnail images can be used and then replaced by the thumbnail image with the ringing background. This can provide a device with a higher degree of efficiency for the end user, and can create a "WOW!" effect for the phonebook application.

According to one aspect of the present invention there is provided an electronic device for displaying an image comprising a display; a memory; and user input apparatus, the device being capable of storing in each of a plurality of records at least one user-configurable data value and an indication of first and second images associated with that record, and having: a first mode in which the device displays two or more of the data values, each in association with the first image identified by the record in which the respective data value is stored; and a second mode in which in response to operation of the user input apparatus to indicate one of the displayed data values the device displays the second image identified by the record in which the respective data value is stored.

### Preferably the first image is a static image

Preferably the second image is dynamic.

Preferably the electronic device is a telephone most preferably a mobile phone. Alternatively, and without limitation, the device could be a PDA (personal digital assistant), a laptop, a positioning device or a camera.

Advantageously, the images stored in respect of the first files are of a smaller resolution than those of the second files.

Advantageously, the device is configured to use the images stored in respect of the second files as a ringing background. Advantageously, the device is configured to store data associating each of the second files with one or more contact records, and to, when a communication is received from an entity for which a contact record is stored with which a second file is associated, display the image stored in respect of that second file.

Preferably, the means for indicating is a highlighter bar or other cursor that is movable under user command relative to a displayed set of items.

Preferably, the electronic device further comprises an image capturing device such as a camera.

Advantageously, the image capturing device is built into the electronic device.

The display may be a touch screen, in which case the input device may advantageously be a stylus. Alternatively, the display may be insensitive to touch and input may be provided by means of a keypad and/or a joystick and/or an input wheel and/or other user-actuable input means.

Advantageously, the memory is a removable or external memory.

An embodiment of the present invention will now be described by way of example with reference to the following drawings.
- Figure 1: illustrates an electronic device;
- Figure 2: illustrates the functional elements of the electronic device;
- Figure 3: illustrates the images stored in a file in an embodiment of the invention; and
- Figures 4: illustrates a flow chart in an embodiment of the invention.

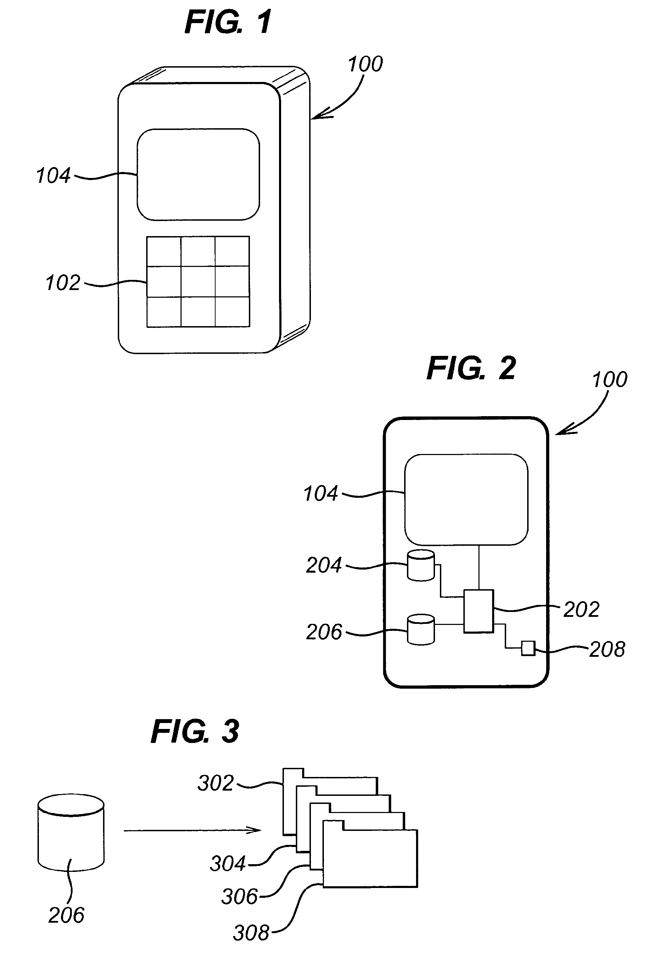

Figure 1 illustrates a phone 100 in an embodiment of the present invention. The phone 100 illustrated comprises controls 102 for inputting information such as phone numbers, text messages and for making and receiving calls. Examples of suitable control devices are numbers keys, input wheels and up and down buttons. The control information may also be commands for navigating through displayed menus, mode selecting information and the like. The phone 100 is also provided with a screen 104. The screen 104 may be a touch screen used for inputting information, selecting options displayed on the screen and the like. The phone may include other interfaces not illustrated in Figure 1. For example, the phone may include a camera either as a built in unit or the phone may include the facility to connect to an external unit via a wired connection or a via a wireless connection, e.g. Bluetooth or any other suitable connection.

Figure 2 illustrates the functional elements that comprise the phone 100. The screen 104 illustrated in Figure 1, is connected to a memory unit 202. The memory unit 202 is connected to a first file 204 and a second file 206. The memory may be internal memory, or some external memory, such as a memory card, memory stick or the like. The memory unit 202 may also be connected to a camera unit 208. The camera unit 208 may be external to the camera phone. When an image is captured by the camera unit 208, it can be stored in the memory 202. The image can be retrieved from the memory 202 and displayed on the screen 104. Figure 3 illustrates a second file 206 comprising a plurality of images 302, 304, 306 and 308 for storing a series of images.

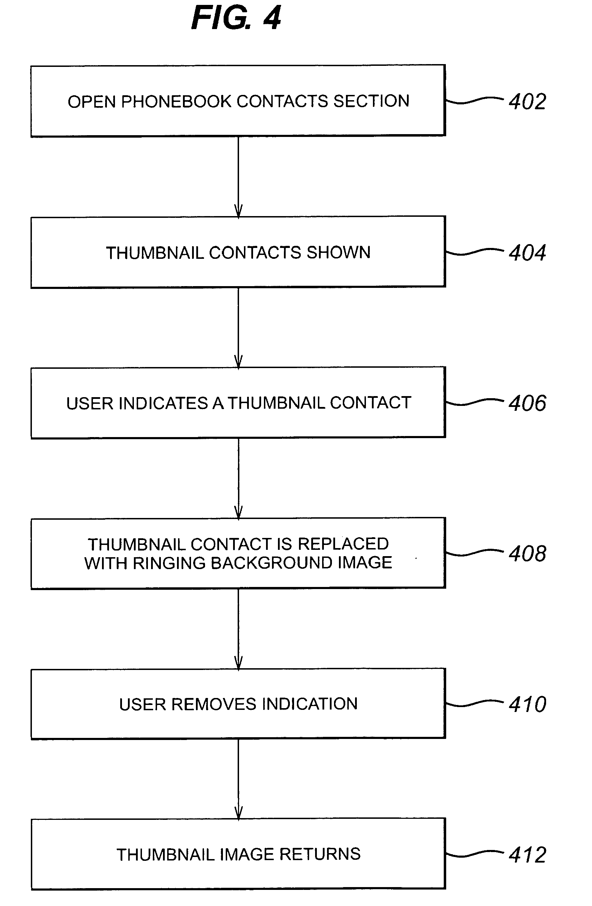

In Figure 4 there is described the steps involves in assigning and viewing the images. Firstly, the user stores or retrieves a static thumbnail image, which is then assigned to a phonebook contact entry. Examples of such an image is a single picture, a logo or an emotions icon. A dynamic ringing background is then be assigned to the same phone book contact entry. Examples include a video or a clip. When a user wants to view the plurality of contact entries stored they first open the phonebook contacts section 402. The thumbnail contacts for each entry are shown 404 in an order. The user then uses the user input to move, for example, a highlighter bar to indicate one of the thumbnail contacts 406. Once indicated, the static thumbnail contact is automatically replaced with the dynamic ringing background image 408 (if one is assigned). If no ringing background is assigned to a contact then the image thumbnail will continue to be shown. The user then moves the highlighter bar away from that contact 410 and the thumbnail image automatically returns 412 and is displayed again. If there is only one contact entry it will automatically be highlighted when the phonebook section is opened by the user, or it may be shown as highlighted along with a separate option to enter a new contact entry. If there are no contact entries then just the option to enter a new contact may be shown.

A number of images, which could be photographs, movies, icons etc, are stored as files accessible to the phone. They could be stored in any of memory built into the phone, memory removable from the phone (e.g. a flash memory card) or memory accessible to the phone via a remote connection, for example over a network accessible through the phone's wireless communication interface. Each image is associated with an address by which it can be accessed. In the case of a locally stored file, that could be a file name and a filing system path. In the case of a remotely stored file it could be a network address or URL (uniform resource locator).

The phone stores a contacts database. The database comprises a number of contact records. Each contact record includes a number of data items which represent fields such as name, phone number and email address for the contact to whom that record relates. One of the fields is the address of an image that is to be used as the phonebook image for that contact: i.e. the image that is to be displayed against that contact when a locally triggered action for that contact is effected: for example it could be displayed against that contact when a phonebook list of contacts is displayed, or when a text message is being composed to that contact. Another of the fields is the address of an image that is to be used as the ringing image for that contact: i.e. the image that is to be displayed in response to the phone determining that it is receiving an incoming communication from that contact. (It should be noted that the phone need not ring when displaying the ringing image).

The user can signal to the phone by means of its user interface that the phonebook is to be displayed. Where at least two contacts are stored this causes the phone to display a list of two, or more, contacts. For each of those contacts it shows one or more key data items (e.g. the contact's name) and the phonebook image for the contact. The phonebook image may need to be reduced in size to fit in the list, or it may already be of thumbnail size. The user can then select one of those contacts by means of the user interface. This may be done in a number of ways. One way is for the user to scroll a cursor by means of the user interface so as to highlight or otherwise indicate the contact, and then to select the contact by means of a subsequent operation of the user interface. Another way is for the user to indicate the contact by entering sufficient letters of the contact's name as to unambiguously identify the contact, and then to select it. Another way - if the phone has a touch-sensitive screen ― is for the user to touch a part of the screen where the contact is being displayed so as to indicate the contact and then to perform another operation to select it. On selection of the contact the full details of the database entry for that contact are displayed. However, whilst the contact is indicated the phone displays the ringing image for that contact.

That displaying may be done in a number of ways. For example, the area of the display where the phone had been displaying the phonebook image could be made to show the ringing image. Another example is for the phonebook image to remain, but for the ringing image to be shown in the background. Another example is for the ringing image to be shown in a separate area of the display.

In this way, the user can readily and in an intuitive manner see what action will be taken when an incoming communication is received from a contact. When the contact is listed on screen but not indicated then the phonebook image for that contact is shown. When the contact is indicated in the list of contacts then the ringing image is shown, with or without the phonebook image. In the case of a device that allows a user to scroll through a list of contacts, a series of ringing images can be displayed as the user scrolls through the contacts.

The functionality of the phone is achieved by suitable programming of the processing equipment contained in the phone.

The phone includes image interpretation software that can interpret image files and cause the display to display the pattern corresponding to the content of the files.

The actions that the end user can perform are not limited to a phone. Since most users store captured images on another storage device, such as a personal computer, and frequently transfer the images from the camera phone to the other storage devices.

It is also noted that while the above describes exemplifying embodiments of the invention, there are several variations of modifications which may be made to the prescribed embodiments without departing from the scope of the present invention as defined in the appended claims. One skilled in the art will recognise modifications to the prescribed embodiments.

The electronic device itself is physically reconfigurable. For example, it may have two parts that can be folded to or from each other or slid over each other. This action may mean that some surface regions of the device are covered in one configuration and exposed in another configuration.

When the device is a mobile phone the data associating the set of images in accordance with the phonebook may be stored on the SIM card (subscriber identifier module) of the phone. The data may therefore be transferred from a first electronic device to a second electronic device by moving the SIM card from the first device to the second device and transferring the user's personal settings.

The incoming communication could, for example, be a phone call, a text or multimedia message or an email. The source of the incoming communication could be detected from a calling line identifier provided by the network or from the content of the communication itself (e.g. in the case of an email).

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

## Claims

1. An electronic device for displaying an image, comprising a display; a memory; and user input apparatus, the device being capable of storing in each of a plurality of records at least one user-configurable data value and an indication of first and second images associated with that record, and having:
a first mode in which the device displays at least one data value in association with the first image identified by the record in which the respective data value is stored; and
a second mode in which in response to operation of the user input apparatus to indicate one of the displayed data values the device displays the second image identified by the record in which the respective data value is stored.

2. An electronic device for displaying an image according to Claim 1 wherein the first image is a static image.

3. An electronic device for displaying an image according to Claim 1 or Claim 2 in which the second image is a dynamic image.

4. An electronic device for displaying an image according to any preceding claim wherein that the electronic device is a telephone.

5. An electronic device for displaying an image according to any preceding claim wherein the images are each stored in respective files.

6. An electronic device for displaying an image according to any preceding claim wherein each of the records includes an identity of a communication source from which the electronic device is capable of receiving communications and the device is arranged to, in response to receiving an incoming communication that it determines to be from a source identified in one of the records, display the second image comprise identified in that record.

7. An electronic device for displaying an image according to any preceding claim wherein that the means for indicating is a highlighter bar.

8. An electronic device for displaying an image according to any preceding claim further comprising an image capturing device.

9. An electronic device for displaying an image according to claim 8 wherein that the image capturing device is built into the electronic device.

10. An electronic device for displaying an image according to any preceding claim wherein that the display is a touch screen.

11. An electronic device for displaying an image according to claim 10 wherein that the input device is a stylus.

12. An electronic device for displaying an image according to any preceding claim wherein that the memory is an external memory.

13. A method for operating an electronic device for displaying an image, the device comprising a display; a memory; and user input apparatus, the method comprising:
storing in each of a plurality of records at least one user-configurable data value and an indication of first and second images associated with that record;
displaying by means of the device two or more of the data values, each in association with the first image identified by the record in which the respective data value is stored; and
in response to operation of the user input apparatus to indicate one of the displayed data values, displaying by means of the device the second image identified by the record in which the respective data value is stored.
